# EUROPEAN PATENT APPLICATION

(11) **EP 2 159 711 A1**
(43) Date of publication of application: **03.03.2010**
(21) Application number: 08305503.8
(22) Date of filing: 26.08.2008
(51) Int. Cl.: G06F 13/38, H04M 1/725

(54) **A method for managing data between a terminal and a token, corresponding token and system**

(71) Applicant: GEMPLUS, 13420 Gémenos (FR)
(72) Inventor: Gleize, Valérie, 13400 Aubagne (FR)

(57) **Abstract**

The invention relates to a method 40 for managing data between a terminal 12 and a token 14. The terminal comprises or accesses to first data storing means 110. The token comprises second data storing means 24. The method comprises a token connecting step in which the token is connected to a host device 16.

According to the invention, the method further comprises a data communicating step in which the token communicates 44, 46, 412, 414, 416 with the terminal, through the host device, as an intermediary entity, via a short range radiofrequency link, at least one piece of data originating from, at least in part, either the first or the second data storing means and intended for either the second or the first data storing means respectively.

The invention also relates to corresponding token and system.

## Description

### Field of the invention:

The invention relates, in a general manner, to a method for managing data between a terminal and a token.

Moreover, the invention relates to a token for managing data with an external entity.

Within the present description, a token is any portable smart object that is not autonomous in power and intended to cooperate with a host device.

Finally, the invention relates to a system for managing data between a terminal and a token.

### State of the art:

As known per se, a mobile phone, as terminal, is connected, through a mobile radio-telecommunication network, to a remote server. A terminal user uploads personal data to the remote server, in order that the remote server copies the personal data.

A smart dongle, as token, cooperates with a Personal Computer (or PC), as a host device, that is connected, through Internet, to the remote server, so that the remote server downloads personal data to the token.

However, such a known solution has a major disadvantage.

As a matter of fact, this known solution requires to be connected to a remote server, in order to synchronize data between the terminal and the token.

### Summary of the invention:

The invention eliminates such a major disadvantage by providing a method for managing data between a terminal and a token. The terminal comprises or accesses to first data storing means. The token comprises second data storing means. The method comprises a token connecting step in which the token is connected to a host device.

According to the invention, the method further comprises a data communicating step in which the token communicates with the terminal, through the host device, as an intermediary entity, via a short range radiofrequency link, at least one piece of data originating from, at least in part, either the first or the second data storing means and intended for either the second or the first data storing means respectively.

The principle of the invention consists in that a token provided with a data storage area cooperates with a host device, in order to receive or transmit data, through a wireless link, from or to a terminal provided with or connected to another data storage area.

The proposed solution allows to synchronize data between the terminal and the token while only involving a host device, as an intermediary transceiver.

Accordingly, contrary to the aforementioned known solution, the proposed solution does not involve any remote server to which a connection is needed to synchronize data between the terminal and the token.

The proposed solution uses a contact-less interface between the token and the terminal. Thus, to operate the proposed solution, a user is not required to manipulate any wire or cable notably between the terminal and the token.

The proposed solution is convenient for the user and therefore user-friendly.

According to a further aspect, the invention is a token for managing data with an external entity. The token is intended to be connected to a host device. The token comprises data storing means.

According to the invention, the token is adapted to communicate with the external entity, through the host device, as an intermediary entity, via a short range radiofrequency link, at least one piece of data originating from either the external entity or via the external entity or the second data storing means and intended for either the second data storing means or via the external entity or the external entity respectively.

According to a further aspect, the invention is a system for managing data between a terminal and a token. The system comprises the terminal, the token and a host device to which the token is to be coupled. The terminal comprises or accesses to first data storing means. The token comprises second data storing means.

According to the invention, the token is adapted to communicate with the terminal, through the host device, as an intermediary entity, via a short range radiofrequency link, at least one piece of data originating from either the first data storing means or the second data storing means and intended for either the second data storing means or the first data storing means respectively.

### Brief description of the drawings:

Additional features and advantages of the invention will be more clearly understandable after reading a detailed description of two preferred embodiments of the invention, given as indicative and non-limitative examples, in conjunction with the following drawings:
- Figure 1 illustrates a simplified diagram of an embodiment of a system comprising a mobile phone, a PC and a smart USB dongle coupled to the PC, the system being adapted to manage data between the mobile phone and the smart dongle according to the invention;
- Figure 2 represents a simplified diagram of an embodiment of the smart USB dongle of figure 1, as token, to be connected to the mobile phone, as terminal, of figure 1;
- Figure 3 illustrates a flow chart of an exemplifying method for managing data between the mobile phone and the smart USB dongle of figure 2;
- Figure 4 is an example of a message flow between the mobile phone, the smart USB dongle, a SIM type card, and the PC, as host device, as the different entities implementing the method of figure 3; and
- Figure 5 is another example of a message flow between the mobile phone, the smart USB dongle, a SIM type card, and the PC, as host device, as the different entities implementing the method of figure 3.

### Detailed description:

Herein under is considered a case in which the invention method for managing data is implemented by a mobile phone, as terminal, in cooperation with a smart Universal Serial Bus (or USB) dongle, as token, and a PC, as a host computer for the smart USB dongle.

However, it is only for exemplifying purposes and is not considered to reduce the scope of the present invention.

For example, instead of being constituted by a smart USB dongle, the token is constituted by a smart card (that requires a specific reader within a host computer), such as a SIM (acronym for "Subscriber Identity Module") card, or a UICC (acronym for "Universal Integrated Circuit Card"), a mass-storage card like a MMC (acronym for "MultiMediaCard") card, a SD (acronym for "Secure Digital") Card, and/or any other electronic medium that may have different form factors. According to still other examples, the token can also be a chip to be fixed, possibly in a removable manner, to a host computer, or a chip to be soldered within a host computer.

Moreover, instead of being constituted by a mobile phone, as a handset, the terminal is, for example, a personal computer, a desktop computer, a laptop computer, and/or a Personal Digital Assistant (or PDA).

Likewise, instead of being constituted by a PC, as host device, the host device consists of a desktop computer, a laptop computer, a handset like a mobile phone or a PDA.

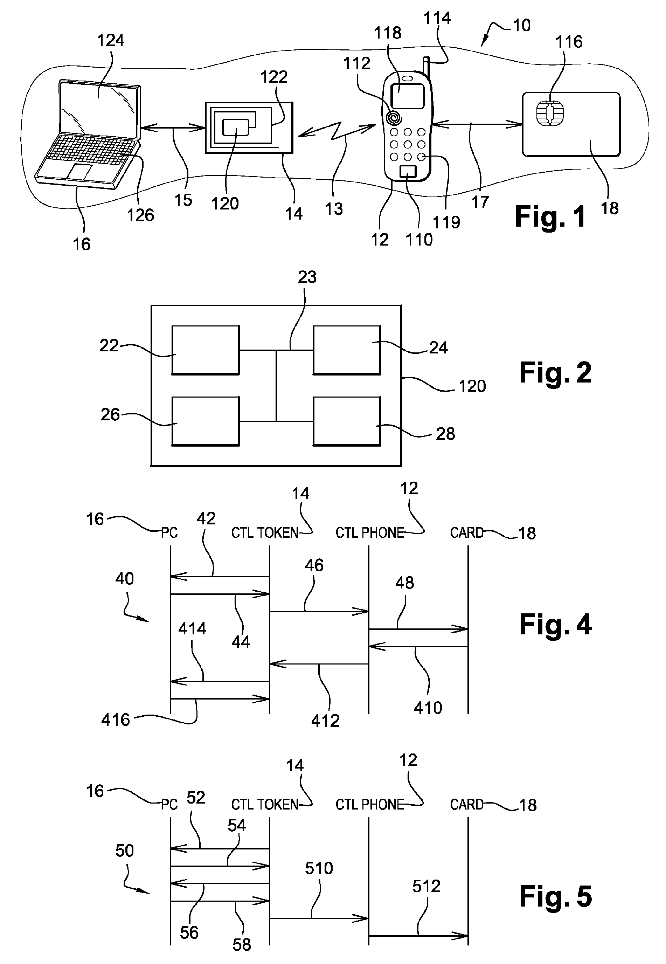

Figure 1 shows an electronic system 10 that includes a mobile phone 12, as terminal, a smart USB dongle 14, as token, and a PC 16, as host device for the smart USB dongle 14.

For simplicity, the mobile phone 12 and the smart USB dongle 14 are termed hereinafter respectively the phone 12 and the dongle 14.

The dongle 14 is carried by a user and connected to the PC 16 for example thanks to a USB connector 15.

The dongle 14 comprises an integrated circuit 120 that contains at least one memory including a mass-storage area that stores, in particular, data that is personal to the dongle user.

According to an interesting feature of the invention, the dongle 14 is adapted to communicate, through the PC 16, via a short range radiofrequency link 13, with the phone 12, in order to transfer notably data from its memory to a memory contained within and/or accessible from the phone 12, such as a memory of a SIM type card 18 coupled to the phone 12, or vice-versa (i.e. transfer data from a memory contained within and/or accessible from the phone 12, such as a memory of a SIM type card 18 coupled to the phone 12, to its memory).

For simplicity, the SIM type card 18, as another token, is termed hereinafter the card 18.

No additional link like a link with a remote server is thus needed to exchange data between the dongle 14 and the phone 12 or the dongle 14 and the card 18 through the phone 12.

The dongle 14 is intended to interact with the PC 16 used by a user to perform a transfer of personal data from the card 18 to the dongle 14 or from the dongle 14 to the card 18, by means of the contact-less link 13 between the dongle 14 and the card 18.

According to other embodiments, a transfer of personal data occurs from the phone 12 to the dongle 14 or from the dongle 14 to the phone 12, by means of the contact-less link 13 between the dongle 14 and the phone 12.

Prior to the transfer of at least certain data, the user may modify it.

To transfer data to or from the dongle 14, the data can be encrypted by the originator of the data to be stored by the addressee.

Once the transfer of data from the phone memory 110 or the card memory to the dongle memory or from the dongle memory to the phone memory 110 or the card memory has been carried out, the dongle 14 is up to date. The dongle memory stores the user personal data that can have been modified by the PC user through a synchronizer and a PC man machine interface.

Within the present description, the word "synchronizer" is at least one transfer of at least a part of data from either the phone memory 110 or the card memory to the dongle memory or from the dongle memory to either the phone memory 110 or the card memory.

To perform the data transfer, the dongle 14 is equipped with an antenna 122 adapted to implement a contact-less communication technology.

Preferably, the dongle 14 is adapted to authenticate its carrier.

Optionally, the dongle 14 is able to encrypt and decrypt data to be exchanged with the interlocutor, as the originator or the addressee of the data to be stored.

The dongle 14 will be further described in relation with the figure 2.

The PC 16 includes, among others, as data processing means, one microprocessor, volatile and non-volatile memories, and at least two Input/Output (or I/O) interfaces.

The microprocessor processes and controls data within the PC 16 and/or data to be exchanged notably with the dongle 14.

The microprocessor controls and communicates with all the components of the PC 16, such as the I/O interfaces.

The non-volatile memory stores an Operating System that manages the hardware and software components of the PC 16, one or several application(s) among which there is a synchronizer. The synchronizer preferably allows to view and synchronize the content of the different data storage areas, namely the dongle memory, the phone memory and/or the card memory, as external memories.

The synchronizer can allow to view and synchronize the different data storage areas, namely the dongle memory, the phone memory and/or the card memory, and the PC memory, as internal memory.

According to another embodiment, instead of being constituted by one single application, there are two separate applications, namely one viewer and one synchronizer, where the viewer and the synchronizer respectively allow to view and synchronize the content of the different data storage areas.

The volatile memory is a working memory, such as a Random Access Memory (or RAM) type memory. The volatile memory is used to store temporary data relating to an application(s) that is(are) currently being executed by the microprocessor, such as data relating to the application stored within the dongle memory 14 and to be executed by the PC microprocessor.

The I/O interface(s) include(s) a PC man machine interface constituted by a display screen 124 and a keyboard 126.

The phone 12 includes, as data processing means, at least one microprocessor, volatile and non-volatile memories 110, at least three I/O interfaces linked together through a data and control bus (not shown).

The microprocessor processes and controls data within the phone 12 and/or data to be exchanged with outside of the phone 12, namely the dongle 14 and the card 18. The microprocessor controls and communicates with all the components of the phone 12, such as the I/O interfaces.

The memories 110 store data relating to an Operating System and applications.

The memories 110 can also store personal data, such as audio and/or video data and a phone book registering data relating to personal contacts, like phone numbers.

As personal contacts, it can be stored with a vCard, as a known file format standard for electronic business cards. The vCard can contain name and address information, a phone number(s), a Uniform Resource Locator(s), a logo(s), a photograph(s), and even an audio and/or video clip(s).

The phone 12 can cooperate with a card 18.

The phone 12 is preferably adapted to communicate data with the card 18.

The card 18 is inserted within the phone 12.

According to another embodiment, instead of the contact interface, the card 18 and the phone 12 are coupled to each other, through a short range radiofrequency link, as contact-less interface, such as a Bluetooth (registered trademark) or a Wifi (registered trademark) link.

Preferably, the I/O interfaces comprise a contact interface (not represented) of the type ISO (acronym for « International Standard Organization ») 7816, as one I/O interface, to interact with the card 18 by using notably Application Protocol Data Unit (or APDU).

The contact interface is intended to let communicate, through a bidirectional contact link 17, with the card 18.

The card 18 includes a chip 116 that contains at least one memory, such as a mass-storage area for audio and/or video data and/or a medium for personal data, like a phone book, as contact data.

In a preferred embodiment, the chip 116 comprises at least one microprocessor, as data processing means, which processes data and controls all the components of the chip 116.

The phone 12 has a first antenna 112, as another I/O interface, to communicate, over the air (or OTA), via a short range radiofrequency bidirectional link 13, i.e. up to a distance about 20 centimeters, with the dongle 14.

According to another embodiment, instead of being carried by the phone 12, the first antenna is directly carried by the card 18.

The first antenna 112 is used for implementing a contact-less technology like a Bluetooth (registered trademark), a Wifi (registered trademark), Zigbee (registered trademark), a International Organization for Standardization (or ISO) 14 443 and/or a Near Field Communication (or NFC) technology(ies), as known per se.

The contact interface contains one contact pad used for implementing a Single Wire Protocol (or SWP), that allows to let communicate, through the first antenna 112 of the phone 12, the dongle 14 and the card 18.

According to a variant, instead of the contact pad reserved for SWP used for communicating through the first antenna 112 of the phone 12 with the PC 16, the card 18, as a targeted interlocutor addressed by the dongle 14 through the PC 16, is itself provided with an antenna (not represented).

The phone microprocessor is also configured to send to the card 18, an event-status to inform the card 18 that data received through the first antenna 12 is intended to the card 18.

The card 18 can launch a user authentication application supported by the card 18.

The user is prompted, through a phone display screen 118, to enter data, as a Personal Identity Number (or PIN), and enters data, through a phone keyboard 119, before accessing to a card memory.

The card 18 verifies whether the entered data matches with the PIN that the card 18 stores. Only when the entered data matches with the PIN, the card 18 authorizes to access a card memory while processing data received through the first antenna 112. Otherwise, i.e. when the entered data is different from the stored PIN, the card 18 forbids to access the card memory. The card 18 can send data relating to a message for informing the user about a successful or unsuccessful authentication result through the PC display screen 124 and/or a phone display screen 118.

To interact with a user from and/or through the card 18, the phone 12 has the capacity to implement a SIM Tool Kit (or STK) mechanism by which the card 18 acts as a master while the phone 12 acts as a slave.

The phone 12 is adapted to interpret any proactive command originating from the card 18 involving a user operation, such as "Display text", "Set-up menu", "Select menu", "Get-inkey", and/or "Get-input".

Alternatively, instead of being processed by the card 18, the phone 12 runs a user authentication application supported by the phone 12.

The phone 12 has a second antenna 114, as another I/O interface, to communicate OTA, via a long range radiofrequency link with a cellular telecommunication network (not represented).

A PC user can, thanks to its dongle 14 in cooperation with the PC 16, synchronize data between either the phone memory 110 and the dongle memory or the card memory (accessible through the first antenna 112 of the phone 12) and the dongle memory.

To perform such a data synchronization, either the phone memory 110 or the card memory is up to date and constitutes a reference and the dongle memory is to be updated, or the dongle memory is up to date and constitutes a reference and the phone memory 110 or the card memory is to be updated.

The data synchronization uses for a corresponding data transfer the contact-less link 13 between the dongle 14 and the phone 12 while involving the PC 16, as an intermediary entity, through which the user can previously modify the data.

Once the data synchronization has been carried out further to a transfer of data either from the dongle 14, as an originator of the transferred data, or to the dongle 14, as a targeted addressee of the transferred data, the dongle memory saves a backup copy, i.e. stores data that is up to date.

The data synchronization can be used for copying personal data relating to contact and/or audio and/or video.

For example, the dongle 14, as the reference entity, sends, via the PC 16, as a router, the up to date data that the dongle 14 stores to the card 18, or, the card 18, as the reference entity, sends, via the PC 16, as a router, the up to date data that the card 18 stores to the dongle 18 by using the contact-less link 13. The addressee of the up to date data, namely the card 18 or the dongle 14, also stores then the received up to date data.

Once the copy has been carried out either onto the dongle 14, or onto the phone 12 or onto the card 18, the personal data lies in both mediums, namely the dongle 14 and the phone 12 or the dongle 14 and the card 18.

Figure 2 schematically shows components incorporated within the dongle 14.

The dongle 14 constitutes a removable smart token that can be plugged into a host device and remove from it.

The dongle 14 integrates a chip 120 that is intended to cooperate with a host computer, such as the PC 16.

The dongle 14 is used to synchronize at least one piece of data between the one stored within the dongle memory and the one stored within a memory of an external entity.

According to a technical feature of the invention, the dongle 14 is adapted to communicate with an external entity through the contact-less link 13.

The chip 120 comprises, as data processing means, one microprocessor 22, volatile and non volatile memories 24, one contact I/O interface 26, and one contact-less I/O interface 28 linked together through a data and control internal bus 23.

The microprocessor 22 controls and communicates with all the components of the chip 120, such as the memories 24 to read them and/or write into them.

The microprocessor 22 executes notably any application stored within card memories 24, and, in particular, an application that will be termed hereinafter synchronizer or "PC synchronization interface" and will be herein-below further explained.

The memories 24 store data, in particular data relating to an Operating System, at least one application, as software component, namely the application "PC synchronization interface", and data relating to a phone book, contacts, emails, a personal organizer, audio and/or video.

The memories 24 preferably store data relating to a driver of a contact-less technology, like a Bluetooth (registered trademark), a Wifi (registered trademark), Zigbee (registered trademark), an ISO 14 443 and/or a NFC technology(ies). The contact-less technology driver is installed as soon as the dongle 14 is plugged into a host computer.

The memories can include one or several mass-storage memories, such as Flash type memories, one or several EEPROM (acronym for "Electrically Erasable Programmable Read-Only Memory"), one or several ROM (acronym for "Read Only Memory"), one or several RAM (acronym for "Random Access Memory") and/or any other memories of different types.

The memories 24 preferably store data relating to an identifier of the card 18, such as an International Mobile Subscriber Identifier (or IMSI), the card with which the dongle 14 has to exchange data. The dongle 14 is set to be thus paired with an external identified card.

The memories 24 preferably comprise credentials, such as PIN and/or keys, among which an encrypting key and a decrypting key.

The credentials can be used to authenticate the user (before accessing the dongle memories 24), encrypt and/or sign data to be sent to the outside world, like the phone 12 or the card 18, and/or decrypt data to be received from the outside world, like the phone 12 or the card 18.

For example, before accessing from the PC 16 to the dongle 14, the user is prompted, through the PC man machine interface, to enter data, as PIN, that is checked by the dongle 14. When the user is authenticated by the dongle 14, namely the dongle 14 has compared the entered data with the right PIN that matches with each other, the dongle 14 authorizes to access from the PC 16 to the dongle memory 24. Otherwise, when the user is not authenticated by the dongle 14, the dongle 14 forbids to access to the dongle memory 24.

The contact I/O interface 26 is used to exchange data with outside of the dongle 14, namely the PC 16. The contact I/O interface 26 can be relating to a USB type technology, a SD type technology, a MMC type technology or the like.

The contact-less I/O interface 28 cooperates with the antenna 122 to exchange data, in a wireless manner, with outside of the dongle 14, such as the phone 12 and/or the card 18. The contact-less I/O interface 28 in cooperation with the antenna 122 implement a contact-less technology, like a Bluetooth (registered trademark), a Wifi (registered trademark), Zigbee (registered trademark), an ISO 14 443 and/or a NFC technology(ies).

The application "PC synchronization interface" can be an applet, as a software component that runs in the context of another software component that runs on the PC 16. The application "PC synchronization interface" allows thus to improve the capacities and/or functionalities of the PC.

The application "PC synchronization interface" can provide one or several functions like at least one security function, one digital signature, one user identification, one user authentication, and/or one on-board key generation.

The application "PC synchronization interface" is made for causing either the dongle chip 120 to send, through the contact-less I/O interface 28, at least one piece of data to an external entity, such as the phone 12 and/or the card 18, or an external entity, such as the phone 12 and/or the card 18, to receive, through the contact-less I/O interface 28, at least one piece of data to the dongle chip 120, in accordance with a user choice.

The application "PC synchronization interface" preferably allows to edit data stored within the dongle memory 24, modify the edited data, namely add new data, remove data, and/or replace data, and copy the data into an external memory, such as a phone memory or a card memory accessible from the phone 12, or copy the data into the dongle memory 24 from an external entity, such as a phone memory or a card memory accessible from the phone 12.

The application "PC synchronization interface" is actuated by data originating from outside the dongle 14, namely the PC 16, through the I/O interface 26.

Preferentially, the application "PC synchronization interface" is launched as soon as the dongle 14 connects to its host computer, namely the PC 16, via the contact I/O interface 26. The application "PC synchronization interface", as an auto-run application, is executed by the PC 16.

Instead of being an auto-run application, the application "PC synchronization interface" stored within the dongle memory 24 is accessible from a PC, as host computer. To access the application "PC synchronization interface", the PC user has to trigger the application execution after an action, such as a double click on a corresponding icon presented on the PC man machine interface.

The application "PC synchronization interface" can be launched, via the PC, to communicate data, through the dongle antenna 122, from or to the dongle 14 with the exterior of the dongle 14 possibly after having modified at least one piece of data.

The application "PC synchronization interface" then processes the data by exchanging data, via the PC 16, and through the contact-less I/O interface 28, with an external entity like the phone 12 and/or the card 18.

Either the dongle 14 has the last version of the data stored within the memory 24, and a PC user, displays, thanks to the application "PC synchronization interface", at least one piece of data stored within the dongle memory(ies) 24, possibly modifies at least one piece of data, and eventually transfers the updated data, through the contact-less I/O interface 28, from the dongle 14 to the phone 12 and/or the card 18, to copy it.

Or the phone 12 and/or the card 18 store(s) the last version of the data within its(their) memory(ies) 24, and a PC user, displays, thanks to the application "PC link", at least one piece of data stored within the external memory(ies), possibly modifies at least one piece of data, and eventually transfers the updated data, through the contact-less I/O interface 28, from the phone 12 and/or the card 18 to the dongle 14, to copy it.

The dongle 14 constitutes a portable electronic medium that is user-friendly, in order to keep a backup copy of data.

The user has no need to use a cable between the dongle 14 and an external entity, such as the phone 12 and/or the card 18, to exchange data.

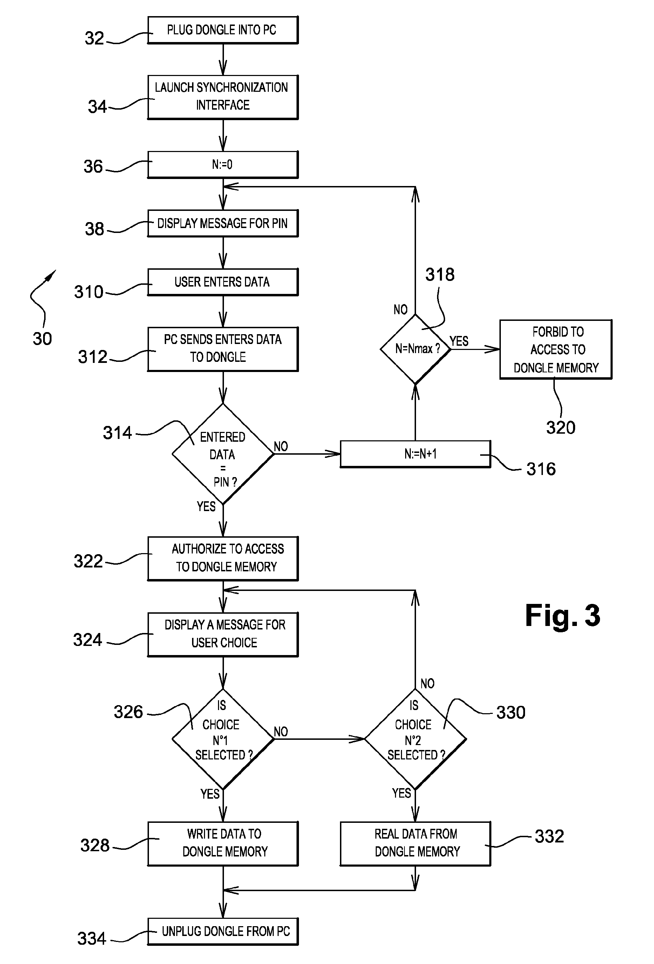

Figure 3 depicts an example of a sequence 30 of steps that is implemented to transfer data either from the dongle 14, as token, to the phone 12, as an identified external entity and a terminal, or from the phone 12 to the dongle 14.

It is assumed that an access to dongle memories 24 requires a user authentication by using a PIN, as secret data known to the sole user and the dongle 14. The user authentication is a function present within the application "PC link".

It is also assumed that a connection to the PC 16, as host device, triggers an execution of the application "PC synchronization interface".

Firstly, the owner of the dongle plugs 32 the dongle into the PC, as host device. The dongle shows several interfaces, namely a PC/mass storage interface to dialog between the PC and the dongle and a PC/contact-less technology modem to dialog through the dongle between the PC and another external entity that is equipped with a contact-less technology modem.

Once the dongle has detected that it is plugged into the PC, the PC executes 34 the application "PC synchronization interface" that is preferably stored on the dongle.

A ratification counter relating to a count of attempts for giving a right PIN that is controlled by the dongle is initialized 36 to zero.

Then, the PC displays 38, for a first attempt, a message for prompting the user to enter data as PIN. This message has been provided by the dongle.

The user enters 310 data as her or his PIN, and validates the data she or he has just entered possibly by actuating a PC button such as "Enter".

The PC sends 312 back, as a response to the message, to the dongle the entered data.

Then, as a first analyze, the dongle analyses 314 whether the entered data matches with the expected PIN. The dongle stores the expected PIN possibly in an encrypted manner to keep it secret (in such a case, the dongle executes a decryption of the encrypted PIN before comparing it to the entered data).

If the answer to the first analyze is no, i.e. when the entered data does not correspond with the right PIN, then the dongle increments 316 the ratification counter value with one unity.

Then, the dongle analyses 318 whether the ratification counter value has reached a predefined maximum value, such as the value "three".

If the ratification counter value is equal to the maximum value, then the dongle forbids 320 to go further by denying to access to the dongle memory, while possibly sending a message to be displayed to the user (through the PC display screen) for informing her or him about this access deny.

On the contrary, i.e. if the ratification counter value is inferior to the maximum value, then the dongle authorizes the user to perform another attempt, while sending a message to be displayed to the user through the PC display screen. In such a case, the PC displays 38, for another attempt, a message for prompting the user to enter data as PIN.

If the answer to the first analyze is yes, i.e. when the entered data corresponds with the expected PIN, then the dongle authorizes 322 to access its memory to read and/or write into them. To authorize an access to its memory, the dongle sends to the PC a message to be displayed to the user (through the PC display screen) for requesting her or him a selection between several types of data transfer while selecting the data to be transferred.

The selection between several types of data transfer to be performed by the user can be to transfer data either from the dongle to a targeted external entity, like the phone (or the card coupled to the phone) or from an identified external entity, like the phone (or the card coupled to the phone) to the dongle.

Such a selection to be performed by the user can be proposed to her or him after a possible updating (not represented) of the data to be transferred to be performed by the user, namely to create new data, remove data, modify data and/or replace data by using the PC man machine interface.

The PC displays 324 the message for requesting the user a selection between several types of data transfer while selecting the data to be transferred.

Once the user has selected one type of data transfer among the proposed ones while selecting the data to be transferred by informing the dongle about the user choice, the dongle analyses 326, as a second analyze, whether the user has selected to transfer data from the dongle to a targeted external entity.

If the answer to the second analyze is yes, i.e. the user has chosen to transfer data from the dongle to the phone, as targeted external entity, then the dongle retrieves and sends 328 the data selected by the user, through the PC, via a dongle antenna, to the identified external entity. The external entity receives, via an antenna to which the targeted entity is directly or indirectly connected, the data originating from the dongle. The targeted entity can thus either store within its own memory and/or a memory contained within an entity to which the targeted entity is connected.

If the answer to the second analyze is no, i.e. the user has not chosen to transfer data from the dongle to an identified external entity, then the dongle analyses 330, as a third analyze, whether the user has selected to transfer data from an identified external entity to the dongle.

If the answer to the third analyze is no, i.e. the user has not chosen to transfer data from the phone, as an identified external entity, to the dongle, then the dongle sends to the PC a message to be displayed to the user (through the PC display screen) for requesting her or him a selection between several types of data transfer while selecting the data to be transferred. Then, as next step, the PC displays 324 the message received from the dongle.

If the answer to the third analyze is yes, i.e. the user has chosen to transfer data from the phone, as an identified external entity, to the dongle, then the phone retrieves and sends 332 the data selected by the user, through the PC, via a phone antenna or an antenna to which the phone is connected, to the dongle. The dongle receives, via a dongle antenna, the data originating from the phone. The dongle can write the thus received data either into its own memory and/or a memory contained within an entity to which the dongle is connected, like a PC memory.

Finally, once the transfer of data through a dongle antenna has been carried out, the user unplugs 334 from the PC the dongle. When the dongle is unplugged, the PC does not have any footprint of the data processed by the PC originating from the dongle or from the card (apart from a contact-less technology driver).

Figure 4 depicts a message flow 40 between the PC 16, the dongle 14, the phone 12, and the card 18, in order to copy data within the dongle.

It is assumed that the dongle memory stores an identifier of the card and the card stores within its memory up to date data that is to be transferred to the dongle memory.

According to another embodiment, the PC user enters data to identify, for example, through the application "PC synchronization interface", a card or another device with which the dongle can communicate through the contact-less technology.

It is also assumed that the phone with which the card is coupled is sufficiently close to the dongle, in order to exchange data, through a short range radiofrequency link, between the dongle and the phone.

Once the dongle has been plugged into the PC, the dongle detects a connection to the PC. The detection of the connection to the PC automatically triggers a sending from the dongle to the PC of a message 42 for launching an execution by the PC of the application "PC synchronization interface". The PC executes the application "PC synchronization interface".

The user, thanks to the PC man machine interface, sees a content of the dongle memory and requests to transfer at least one piece of data stored within a card (coupled with the phone) to the dongle.

Once the user has made her or his request for transferring data stored within the card, the PC synchronization interface sends to the dongle a request 44 for loading data, such as data relating to a phone book, stored within the card.

After having received such a request, the dongle sends to the phone, through the short range radiofrequency link, a message 46 for requesting to read data stored within the card.

Optionally, the message for requesting to read data stored within the card is accompanied with information relating to the reference of the last version of the copy of data stored on the dongle.

As soon as the phone receives the message 46 sent by the dongle, the phone forwards to the card the message 48 for requesting to read data stored within the card.

Once the card has received and processed the request originating from the PC, the card sends to the PC, as response to the request, a message 410 encompassing data read onto the card memory that stores the phone book.

As soon as the phone receives the message 410 sent by the card, the phone transmits to the dongle, through the short range radiofrequency link, a message 412 encapsulating data relating to the phone book.

Then, the dongle receives the message accompanied with data relating to the phone book and sends a message 414 accompanied with data relating to the phone book to the PC.

Once the application "PC synchronization interface" has received the message, the PC sends to the dongle a message 416 including data relating to the phone book. To do this, the application "PC synchronization interface" carries out a separation of the data relating to the phone book while removing the separation data arranged between the different contacts of the phone book, in order that the dongle stores the data relating to the phone book.

Finally, after having received the message, the dongle writes into a dongle memory data relating to the phone book that originates from the card.

From a menu relating to the application "PC synchronization interface" displayed on the PC display screen, the user has thus launched a backup copy of data upon the dongle.

Figure 5 depicts a message flow 50 between the PC 16, the dongle 14, the phone 12, and the card 18, in order to copy data within the card 18.

It is assumed that the PC user has updated data that she or he has stored within the dongle. Thus, the dongle stores within its memory up to date data relating for example to a phone book. The up to date data is to be transferred from the dongle to the card.

It is also assumed that the phone with which the card is coupled is sufficiently close to the dongle, in order to exchange data, through a short range radiofrequency link, between the dongle and the phone.

Firstly, when the dongle is plugged into the PC, the dongle detects a connection to the PC. The detection of the connection to the PC automatically triggers a sending from the dongle to the PC of a message 52 for launching an execution by the PC of the application "PC synchronization interface". The PC executes the application "PC synchronization interface".

The user, thanks to the PC man machine interface, sees a content of the dongle memory and requests to transfer at least one piece of data stored within the dongle to an identified card (coupled with the phone).

Once the user has made her or his request for transferring data stored within the dongle, the PC sends to the dongle a request 54 for loading data relating to a phone book to the card.

After having received such a request, the dongle sends to the PC, a message 56 encompassing data relating to a phone book and read from the dongle memory.

After having received such a message accompanied with the phone book data, the application "PC synchronization interface" concatenates the contacts of the phone book while integrating separation data between the different contacts of the phone book. Then, the application "PC synchronization interface" sends to the dongle a message 58 for requesting it to send the accompanying resulting phone book data to a card identified within this message.

Once the message has been received by the dongle, the dongle sends to the identified card, through the short range radiofrequency link, a message 510 for requesting the card to store the phone book data that is comprised within this message.

As soon as the phone receives, via a phone antenna, this last message sent by the dongle, the phone forwards to the card a message 512 for requesting the card to store the phone book data accompanying the message and read from the dongle.

Once the card has received and processed the request message originating from the PC, the card separates the different contacts of the phone book data included within the request message.

Then, the card writes into a card memory data relating to each contact of the phone book that originates from the dongle.

From a menu relating to the application "PC synchronization interface" displayed on the PC display screen, the user has thus launched a backup copy of data upon the card.

Consequently, the dongle equipped with a contact-less communication technology capacity allows to connect a PC and a handset or any entity connected to the handset provided that the handset is itself also equipped with a contact-less communication technology capacity.

## Claims

1. A method (30) for managing data between a terminal (12) and a token (14), the terminal comprising or accessing to first data storing means (110 or 116), the token comprising second data storing means (24), the method comprising a token connecting step (32) in which the token is connected to a host device (16),
**characterized in that** the method comprises a data communicating step in which the token communicates (44, 46, 412, 414, 416; 54, 56, 58, 510) with the terminal, through the host device, as an intermediary entity, via a short range radiofrequency link (13), at least one piece of data originating from, at least in part, either the first or the second data storing means and intended for either the second or the first data storing means respectively.

2. Method according to claim 1, wherein the data communicating step comprises:
- a synchronizer sends to the token a request (44) for loading, at least in part, data stored within the first data storing means into the second data storing data storing means, and
- the token sends (46) to the terminal, through the short range radiofrequency link, the request for loading, at least in part, data stored within the first data storing means into the second data storing data storing means.

3. Method according to claim 2, wherein the data communicating step comprises:
- the terminal sends (412), as response to the request, through the short range radiofrequency link, to the token, data read from the first data storing means;
- the token sends (414) to the synchronizer data read from the first data storing means;
- the synchronizer sends (416) to the token data read from the first data storing means.

4. Method according to any of claims 1 to 3, wherein the data communicating step comprises:
- a synchronizer sends to the token a request (54) for transferring, at least in part, data stored within the second data storing means to the first data storing means, and
- the token sends (56), as response to the request, to the synchronizer, data read from the second data storing means.

5. Method according to claim 4, wherein the data communicating step comprises:
- the synchronizer sends (58) to the token data read from the second data storing means;
- the token sends (510), through the short range radiofrequency link, to the terminal data read from the second data storing means.

6. A token (14) for managing data with an external entity (12), the token being intended to be connected to a host device (16), the token comprising data storing means (24), said second data storing means,
**characterized in that** the token is adapted to communicate with the external entity, through the host device, as an intermediary entity, via a short range radiofrequency link (13), at least one piece of data originating from either the external entity or via the external entity or the second data storing means and intended for either the second data storing means or via the external entity or the external entity respectively.

7. Token according to claim 6, wherein the token comprises means for authenticating its user.

8. A system (10) for managing data between a terminal (12) and a token (14), the system comprising the terminal, the token and a host device (16) to which the token is to be coupled, the terminal comprising or accessing to first data storing means (110 or 116), the token comprising second data storing means (24),
**characterized in that** the token is adapted to communicate with the terminal, through the host device, as an intermediary entity, via a short range radiofrequency link (13), at least one piece of data originating from either the first data storing means or the second data storing means and intended for either the second data storing means or the first data storing means respectively.

9. System according to claim 8, wherein the host device comprises at least one element comprised within the following group:
- a personal computer;
- a desktop computer;
- a mobile telephone;
- a personal digital assistant; and/or
- a laptop computer;
wherein the terminal comprises at least one element comprised within the following group:
- a personal computer;
- a desktop computer;
- a mobile telephone;
- a personal digital assistant; and/or
- a laptop computer;
and wherein the token comprises at least one element comprised within the following group:
- a chip card;
- a Subscribed Identity Module card;
- a Universal Integrated Circuit card;
- a Universal Serial Bus dongle; and/or
- a smart key.

10. System according to claim 8 or 9, wherein the short range radiofrequency link is of the type Bluetooth, Wifi, Zigbee and/or International Organization for Standardization 14 443.
